Europäisches Patentamt

European Patent Office

Office européen des brevets

(19)

(11) Publication number: **0 445 745 A2**

## EUROPEAN PATENT APPLICATION

(12)

(21) Application number: **91103339.7**

(22) Date of filing: **05.03.91**

(51) Int. Cl.5: **G05B 19/05**

(30) Priority: **08.03.90 JP 55108/90**

(43) Date of publication of application:
**11.09.91 Bulletin 91/37**

(84) Designated Contracting States:
**DE GB**

(71) Applicant: **HITACHI, LTD.**
**6, Kanda Surugadai 4-chome**
**Chiyoda-ku, Tokyo 100(JP)**

Applicant: **HITACHI KEIYO ENGINEERING CO.,**
**LTD.**
**1-1, Higashinarashino-7-chome**
**Narashino-shi Chiba-ken(JP)**

(72) Inventor: **Oshiga, Takayuki**
**Kopo Endo 201, 83, Mimomicho-2-chome**
**Narashino-shi(JP)**
Inventor: **Fujiwara, Katsuhiro**
**20-21, Ojidai-3-chome**
**Sakura-shi(JP)**
Inventor: **Naito, Masanori**
**Hitachi Shumeiryo, 248-1, Mimomicho Hongo**
**Narashino-shi(JP)**
Inventor: **Arai, Mikio**
**21-2, Miyanoda-2-chome**
**Sakura-shi(JP)**

(74) Representative: **Strehl, Schübel-Hopf,**
**Groening**
**Maximilianstrasse 54 Postfach 22 14 55**
**W-8000 München 22(DE)**

(54) **Programmable controller.**

(57) A write memory area (8a) and a reference memory area (8b) are employed in a user memory (I5) of a programmable controller (Ia), and a PID constant which has been arbitrarily changed based upon an externally inputted numeral value is written into the write memory area (8a), whereas the PID constant stored in the write memory area (8a) is transferred by a user program into the reference memory area (8b) within a time period which has been determined based on a time divisional control between a sequence calculation and a PID calculation. Then, the PID calculation is carried out with reference to the PID constant transferred to the reference memory area (8b). Also, when the numeral value is externally inputted into the user program within the time period determined by the time divisional control, the PID calculation is carried out and a calculation result is written into the write memory area (8a). Accordingly, the PID constant is arbitrarily changed without interrupting either operation of MPU (II), or the PID calculation.

F I G. I

## BACKGROUND OF THE INVENTION

The present invention generally relates to a programmable controller for processing both a sequence calculation and a PID (proportion, integration and differentiation) calculation in a parallel mode. More specifically, the present invention is directed to a programmable controller suitable for setting various sorts of constants employed for the PID calculation to optimum values.

As shown in Fig. l0, a conventional programmable controller controls an apparatus 5 for a sequence control in such a manner that a sequence program stored in a user memory l5 is successively read via a bus l4 by an MPU (microprocessing unit) ll, an arithmetic processing operation is carried out with employment of data derived from an input/output unit 2 and thus the apparatus 5 is controlled. The input/output unit 2 includes a digital input unit 2l, a digital output unit 22, an analog input unit 23, and an analog output unit 24, and also transfers both a target value of the PID calculation value and a measurement value via these units.

User programs 40 and 4l are inputted from the programming tool 3, and stored into a user memory l5 via a peripheral interface l3 of a CPU (central processing unit) portion l. The user memory l5 is subdivided into a normal scanning program unit 40 where a head portion of the program to an END instruction thereof are cyclically calculated, and a constant period scanning program unit 4l where the instructions are read at a constant period so as to execute an interruption under execution of this normal scanning program unit 40.

With respect to the normal scanning program unit 40, a total processing time is prolonged, as compared with a program amount of a user, and a response speed for a control signal is delayed. As a result, when the normal program unit 40 becomes large, a program required for highspeed response controls is combined within the constant period program unit 4l. It should be noted that a memory unit l2 is used to temporarily store therein either a system program or data.

Very recently, there are varieties for the apparatuses to be controlled. Programmable controllers are also used in the process controls. Furthermore, such a system for performing not only the sequence control, but also the PID control in a parallel mode is widely realized. When such a PID control is executed, it is common to provide a PID arithmetic processing program within the constant period scanning program unit 4l.

It should be noted that the above-described programmable controllers are known in the art, for instance, "HITACHI HYORON" issued in July, l989, (U.D.C. 658, 527, 7'32) at pages 43 to 48.

In accordance with a PID control, it is a very rare case that optimum values for various sorts of constants, i.e., proportional constants, integral constants and differential constants (referred to as "PID cosntants" hereinafter) used for the PID calculation, have been known at the beginning of controls. There are many possibilities that these optimum values may be determined by the adjustments when the actual controls commence. In other words, after the PID controls have been actually performed, the optimum values thereof could be found out. Moreover, the PID control necessarily requires the continuous control and therefore it is impossible to rearrange the PID constants while interrupting the PID control operation. Accordingly, there is a problem that to rearrange the PID constants in the conventional programmable controller for parallel-processing the sequence control and PID control, the operation of the apparatus to be controlled must be once interrupted, otherwise these PID constants cannot be changed and also the optimum PID control cannot be realized.

## SUMMARY OF THE INVENTION

An object of the present invention is to provide a programmable controller capable of executing an optimum PID control in case that both a sequence calculation and a PID calculation are carried out in a parallel mode.

Another object of the present invention is to provide a programmable controller capable of shortening a rising time of a process control by a function which arbitrarily changes values of PID constants into optimum values without stopping operations of the programmable controller.

A further object of the present invention is to provide a programmable controller capable of enhancing an operation rate of an overall loop control system by a function which arbitrarily changes PID constants of one loop control system among a plurality of loop control systems into optimum values without stopping the other loop control system when the PID constants of the one loop control system are changed.

The above-described objects of the present invention may be achieved by employing a means capable of changing PID constants even during PID calculating operation in a programmable controller for processing both the sequence calculation and the PID calculation in a parallel mode.

Also, the above-described objects of the present invention may be achieved in that in a programmable controller including: a CPU for processing both a sequence calculation and a PID calculation in a parallel mode; a user memory for storing therein a control logic for said sequence calculation and said PID calculation; input/output means for inputting a measurement value from a process system and also for transferring a target value from said CPU; and also a programming tool for writing a numeral value for changing a PID constant used for said PID calculation, into said user memory, it comprises: a first memory capable of arbitrarily writing said PID constant into said user memory; transfer means for transferring said PID constant which has been written into said first memory within a predetermined time period determined by the parallel process; and, a second memory for storing therein said PID constant which has been transferred from said transfer means, and also for referring to said PID constant from said process system during said PID calculation.

In case that CPU executes the PID calculation, the PID calculation is carried out with reference to the PID constants stored in the memory. As a consequence, if the PID constants which have been stored into this memory are rewritten when the PID calculation is not executed, the PID constants may be changed into the optimum values without interrupting the PID calculation. More specifically, a write memory area writable by a user, other than a memory area for referring to CPU is provided as a memory area, the contents of the write memory area are transferred to the reference memory area during a time period other than the PID control time, whereby the PID constants may be changed into the optimum values.


BRIEF DESCRIPTION OF THE DRAWINGS

Fig. I is a schematic block diagram of a programmable controller according to a preferred embodiment of the present invention;

Fig. 2 shows a constructive diagram of a user program for setting PID constants;

Fig. 3 schematically illustrates both a write memory area and a reference memory area, into which the PID constants are written;

Fig. 4 schematically represents both of the memory areas of Fig. 3 in more detail;

Fig. 5 schematically shows a constructive diagram for changing the PID constants;

Fig. 6 schematically represents another constructive diagram for changing the PID constants according to another preferred embodiment of the present invention;

Fig. 7 is a flowchart for explaining a normal scanning program;

Fig. 8 is a flowchart for explaining a constant period scanning program;

Fig. 9 is a flowchart for explaining the content of step 5 shown in the flowchart of Fig. 7; and,

Fig. I0 is a schematic block diagram of the conventional programmable controller.

DESCRIPTION OF THE PREFERRED EMBODIMENTS

Referring now to drawings, an embodiment of the present invention will be described.

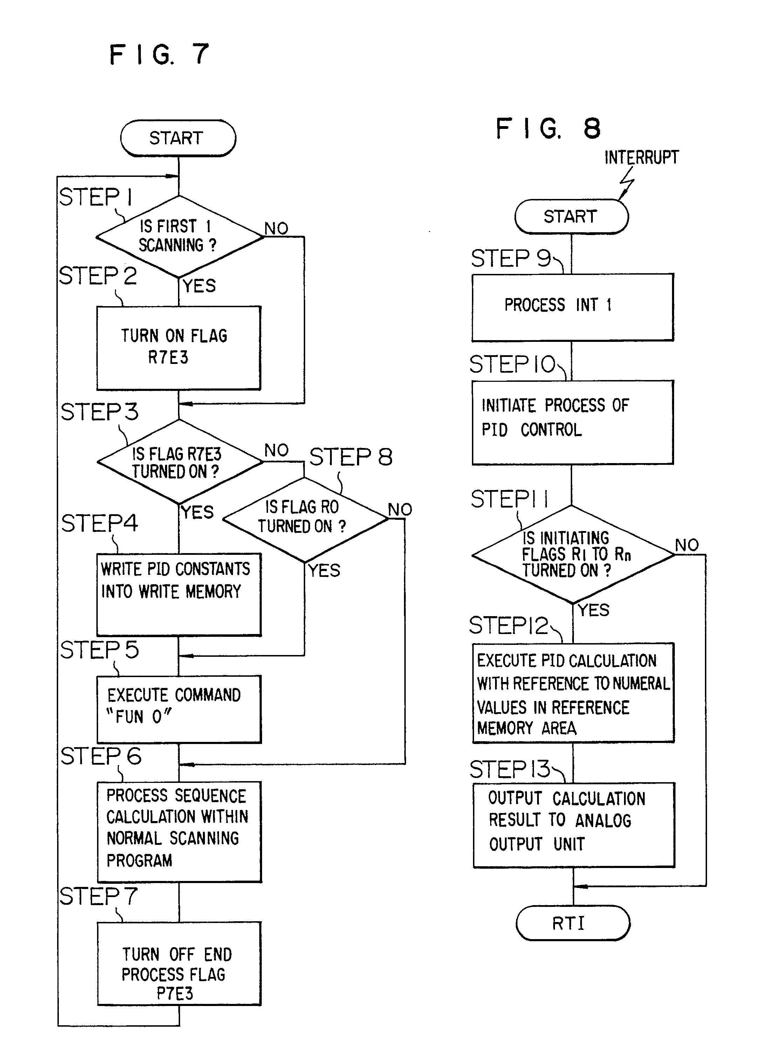

Fig. I shows a constructive diagram of a programmable controller Ia according to one embodiment of the present invention. It should be noted that since the programmable controller represented in Fig. I owns a common arrangement with that of the conventional programmable controller which has been described with reference to Fig. 7, the common numeral numbers and also symbols will be employed as those for denoting same constructive elements. A MPU (microprocessing unit) II reads a normal scanning program 40 which has been stored in a user memory I5, and sequentially executes a sequence calculation so as to sequence-control an apparatus 5 to be controlled via a digital input unit 2I and a digital output unit 22 provided at an input/output unit 2.

On the other hand, a constant period scanning program 4I is executed one time per 20 milliseconds, and an arithmetic operation is carried out from an "INTI" command, or instruction (a label indicative of a commencement of the constant period scanning operation) to an "RTL" command (a command for returning the scanning operation from the constant period scanning operation to the normal scanning operation). Then, a "PID C" instruction has the following function.

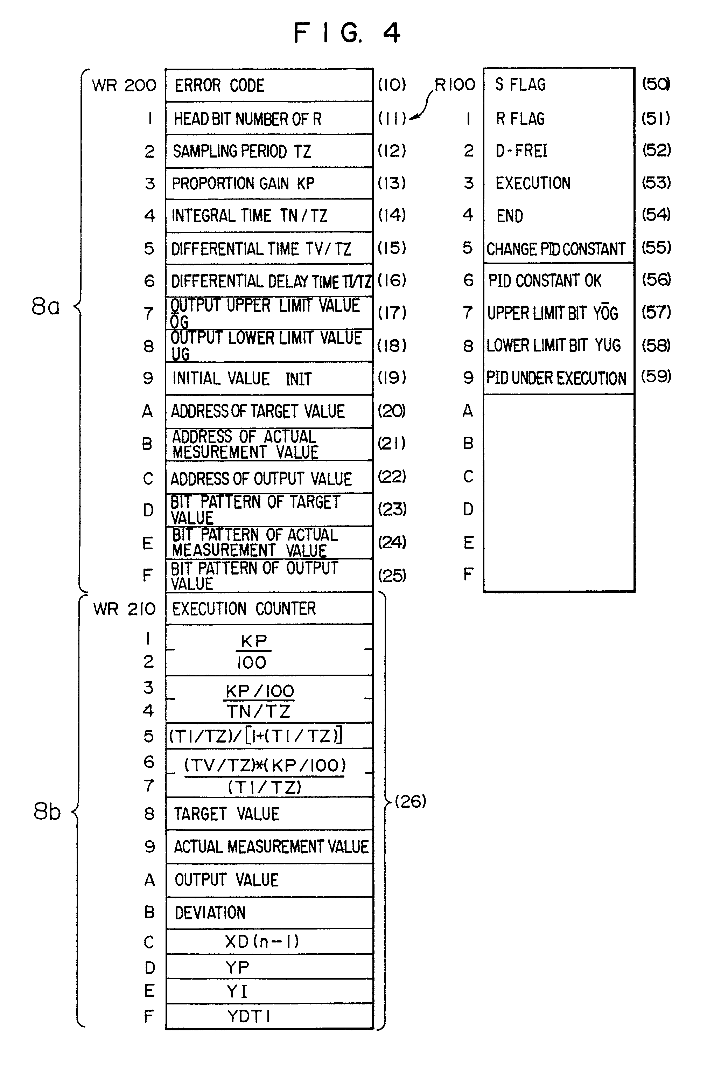

Initiating flags "RI" to "Rn" of PID calculation instructing groups which are indicated by "PIDI" to "PIDn" and have been programmed, are successively turned on every 20 milliseconds, and also such a time period is given that a PID constant changing flag (55) shown in Fig. 4 (will be discussed later) is turned on, a time when the initiating flag (one of flags RI to Rn) of the relevant PID calculation instruction (PIDI through PIDn) is turned on, is delayed until flag (55) is turned off, and then the PID calculation instruction has been accomplished.

Referring back to Fig. I, the PID calculation instruction "PIDn" is executed when the initiating flag Rn is turned on. In response to the PID calculation instruction "PIDn", a PID control for an apparatus 6 to be controlled is carried out in such a manner that both a target value "Wn" and a measurement value are read out from an analog input unit 23, the PID calculation is carried out while referring to the respective PID constant values which have been stored in a PID calculation area 26 functioning as a reference memory area 8b as shown in Fig. 4, and then the calculation result is outputted to an analog output unit 24.

Both of the above-described sequence calculation and PID calculation are processed in a parallel mode in a CPU (central processing unit) portion I. That is to say, both of the sequence calculation and PID calculation are processed in the time divisional mode, and the PID calculation is carried out with reference to the PID calculation which have been stored in the reference memory 8b (will be described in detail).

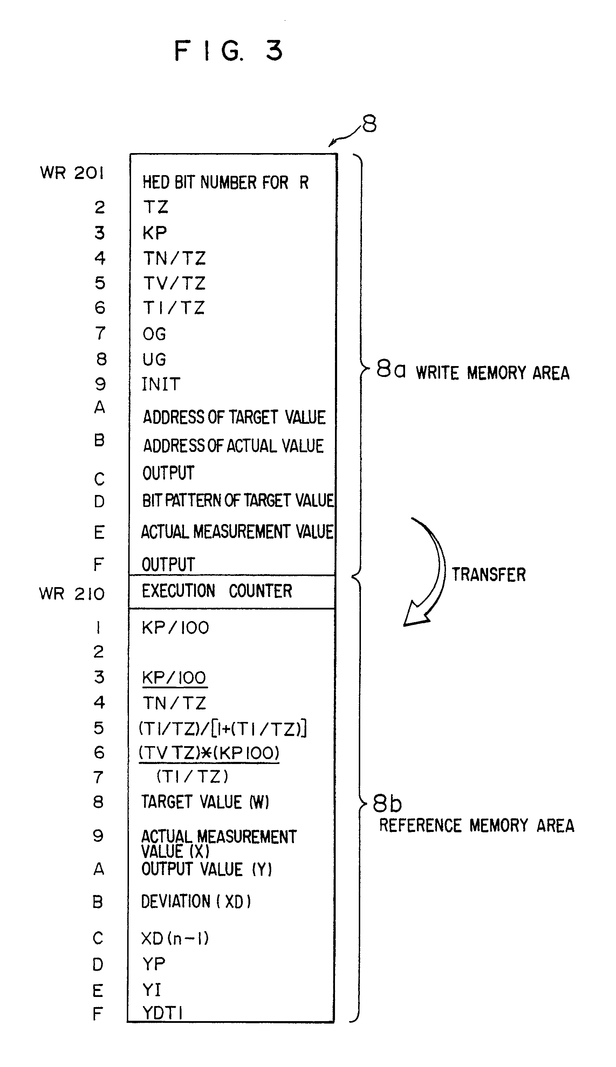

A feature of the present invention is such that, as represented in Fig. I, a work memory 8 independent from the user memory I5 is provided in the CPU Portion I. As shown in Fig. 3, the work memory 8 is constructed of the reference memory area 8a for the PID constants and the write memory area 8b into which the PID constant may be written, as represented in Fig. 3. A detailed content shown in Fig. 3 will be described later.

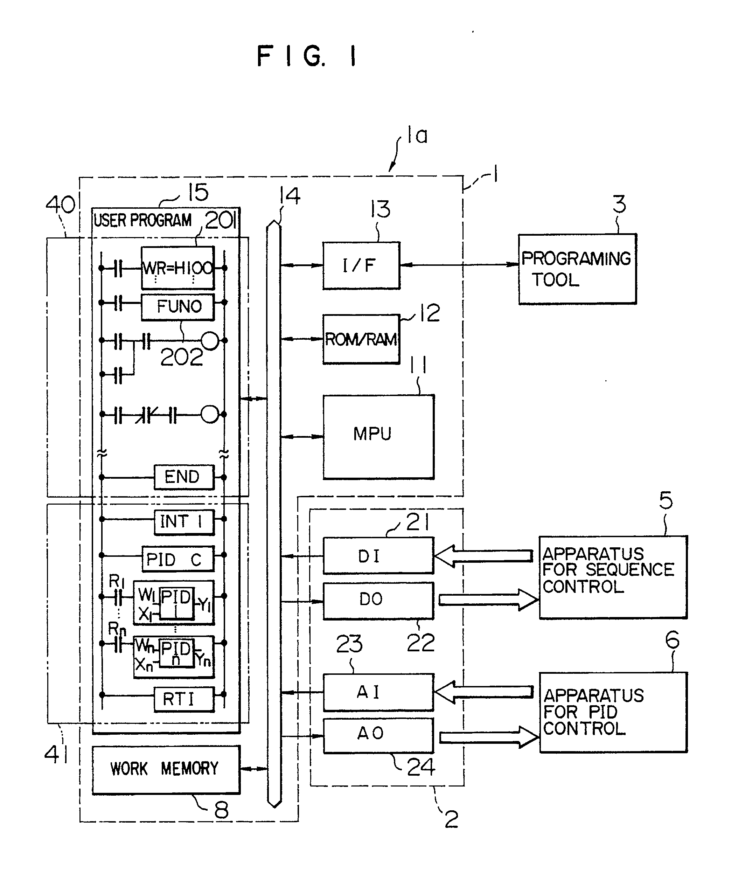

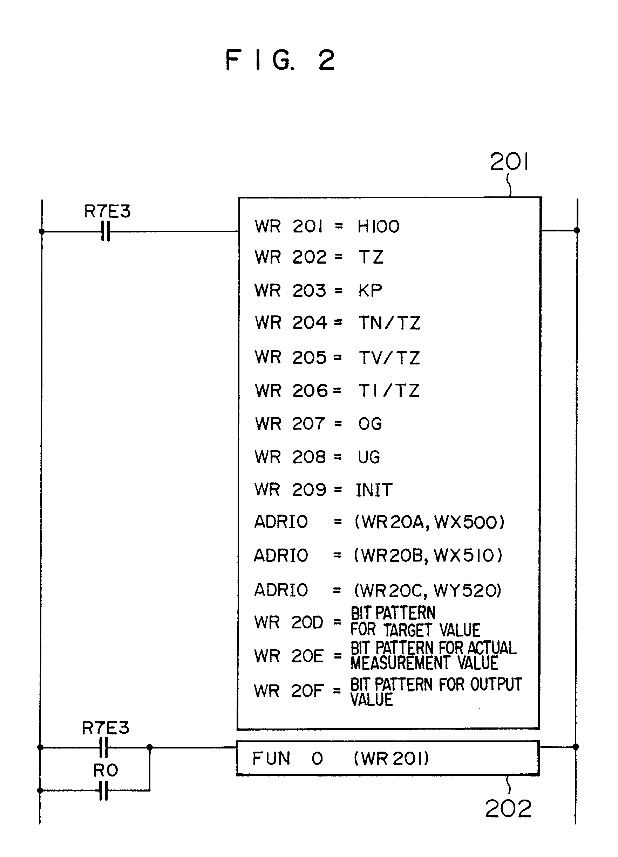

Fig. 2 is a constructive diagram of a user program used for writing the PID constants required for the PID calculation into the write memory area 8a. This program is arranged by a command group of a first circuit 20I and also a command of a second circuit 202, as shown in Fig. I. Work registers WR 20I to WR 20F correspond to the write memory area 8a represented in Fig. 3. The command group of the first circuit 20I shown in Fig. 2 is executed by the initiating group R7E3, and the values of the right hand for the command group of the first circuit 20I which has been designated by the user, are stored into the work register at the left hand. Accordingly, the user programs necessary constants into the right hand of this equation. Then, since this operation is executed only once when the system is initiated, the initiating flag R7E3 of the first circuit 20I has such a function that a scan counter is turned on only one time when the power supply is turned on. Since explanations of these commands to constitute the program are irrelevant to the present invention, a further description thereof is omitted.

The second circuit 202 of Fig. 2 corresponds to the instructions, or commands which have been especially provided in the present invention, and therefore a detailed explanation thereof will be made later A command "FUN 0" is such a command that data constructed by I5 words are transferred from the work register indicated within a bracket subsequent thereto into the PID calculation area 26 functioning as the reference memory area 8b shown in Fig. 4 (also will be described later). Also this command "FUN 0" has a function for turning on the PID constant changing flag (55) shown in Fig. 4 under execution of the command of the first circuit 20I, and for turning off the PID changing flag (55) when the commands of the first circuit 20I is completed. Furthermore, a command "FUN 0" has such a function that while the PID constants are being transferred from the write memory area 8a to the reference memory area 8b, a preprocess calculation for the succeeding PID calculation to be changed based on the numeral values inputted by the user is commenced. The preprocess calculation will now be described. That is, this preprocess calculation implies that combination of the constants (PID constants) is calculated except for variables (measurement value, target value and output value) to determine value of coefficients described later because of carrying out the PID calculation.

In general, a transfer function of a PID control system is indicated by an equation (I) as shown later. This is quantized to obtain another equation which may be calculated by the programmable controller Ia and is expressed by an equation (2) as shown later.

$$\text{transfer function} \quad F(S) = K_p(1 + \frac{1}{sT_N} + \frac{sT_V}{1 + sT_1})$$

$$\ldots \ldots \quad (1)$$

output of PID calculation

$$Y = YP + YI + YD \quad (2)$$

where

s = Laplace oprator

$$YP = \frac{K_P}{100} \cdot XD$$

$$YI = \frac{K_P}{100} \cdot \frac{XD}{T_N/T_Z} + YI(n-1)$$

$$YD = \frac{T_1/T_Z}{1+T_1/T_Z}\{YD(n-1) + \frac{1}{T_1/T_Z} \cdot \frac{T_V}{T_Z} \cdot \frac{K_P}{100} \cdot (XD-XD(n-1))\}$$

explanation of coefficients

$Y$ : output
$YP$ : proportional term of output
$YI$ : integral term of output
$YD$ : differential term of output
$XD$ : input deviation (target value-measurement value)
$XD(n-l)$ : deviation obtained during preceding calculation
$YI(n-l)$ : integral term obtained during preceding calculation
$YD(n-l)$ : differential term obtained during preceding calculation
$K_P$ : proportional constant
$T_N$ : integral time
$T_V$ : differential time
$T_I$ : differntial delay time
$T_Z$ : sampling time

Giving an attention to the coefficients of the equation (2), when the user does not change the PID constants, there is no change in the calculation results such as:

$$\frac{K_P}{100} \cdot \frac{T_1/T_z}{1 + T_1/T_z}$$

As previously explained, if the user inputs the numeral values in order to change the PID constants, the preprocess calculation is carried out so that the PID constants are written into the write memory area 8a. As a consequence, the PID constants may be modified without stopping the PID calculation. Also, since the calculation for the PID constants need not be carried out at every constant period of the PID calculation and time may be effectively utilized, the reliabilities on the PID control may be improved.

Fig. 3 is a schematic allocation diagram for the work memory 8. Reference numerals WR20I to WR20F correspond to the write memory area 8a for storing the PID constants designated by the user, whereas reference numerals WR2I0 to WR2IF correspond to the reference memory area 8b which is referred when the CPU portion I executes the "PIDn" command. It should be noted that since the detailed explanations for these PID constants are not directly relevant to the present invention, these explanations are omitted.

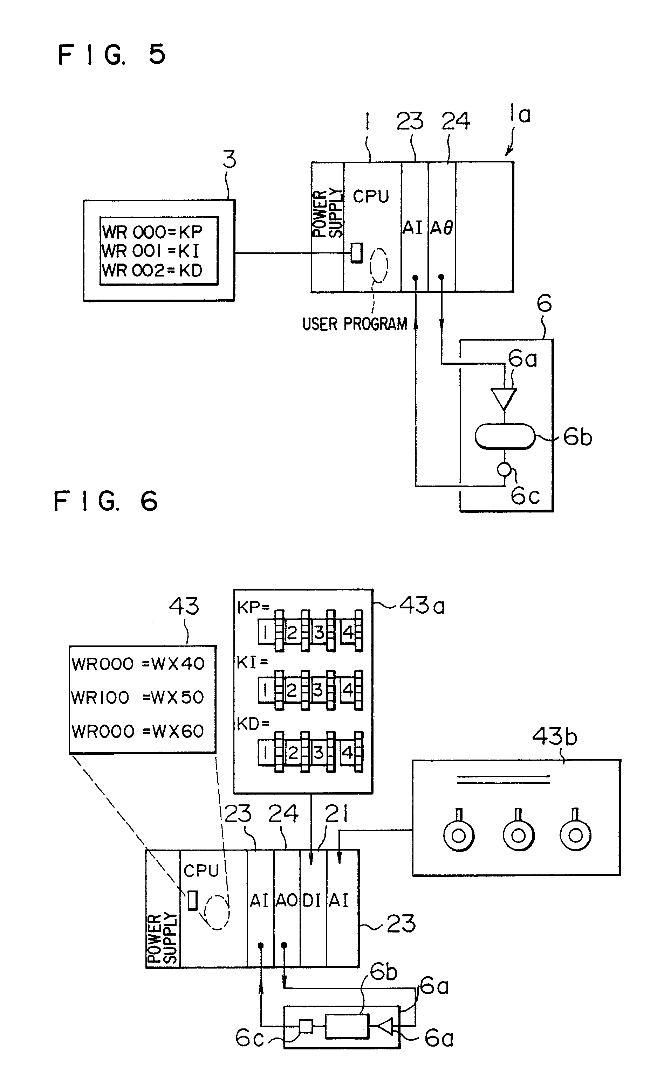

Fig. 4 is a constructive diagram for explaining the contents of both the write memory area 8a and the reference memory area 8b shown in Fig. 3, in detail. In Fig. 4, there is additionally shown an allocation of a flag (53) for a bit internal output referred by the command. In case that the PID constants are changed while the CPU portion I is under operation, as represented in Fig. 5, the user changes the contents of the register WR20I to WR20F as the write memory area 8a into which PID constants to be changed have been stored. At this stage, the PID constants obtained after modification are not yet reflected in the calculation process of "PIDn" within the constant period scanning program 4I. Subsequently, when a flag "RO" (see Fig. 2) functioning as the initiating condition of the command "FUN 0" is turned on, the PID constants after modification are transferred to a PID calculation area 26 as the reference memory area 8b shown in Fig. 4

EP 0 445 745 A2

by way of the command "FUN 0", and furthermore, all of the PID constants after modification are simultaneously reflected into the calculation process for "PIDn".

As represented in Fig. 5, the apparatus 6 to be controlled corresponds to a heating furnace or the like which is constructed of a driver 6a, an actuator 6b, and a sensor etc. Then, a target value of heating temperatures is supplied from an analog output unit 24 to a driver 6a, and temperature measurement values are supplied from the sensor 6c to the analog input unit 23, whereby the programmable controller la PID-calculates the temperatures within the heating furnace with reference to the PID constants which have been set to the reference memroy area 8b.

Although the PID constants were changed by employing the programming tool 3 in accordance with the above-described embodiment, as represented in Fig. 6, a digital input unit 2l or an analog input unit 23 are newly connected to the programmable controller la so that these PID constants may be varied based on output signals from a digital switch 43a or a potentiometer 43b. In this case, as shown in the user program 43, the signals from the digital switch 43a on potentiometer 43b are continuously supplied to the right hand of the command. As a result, the PID constant modification of the write memory area 8a may be successively executed and then the contents of the reference memory area 8b are substituted by the PID constants of the write memory area 8a.

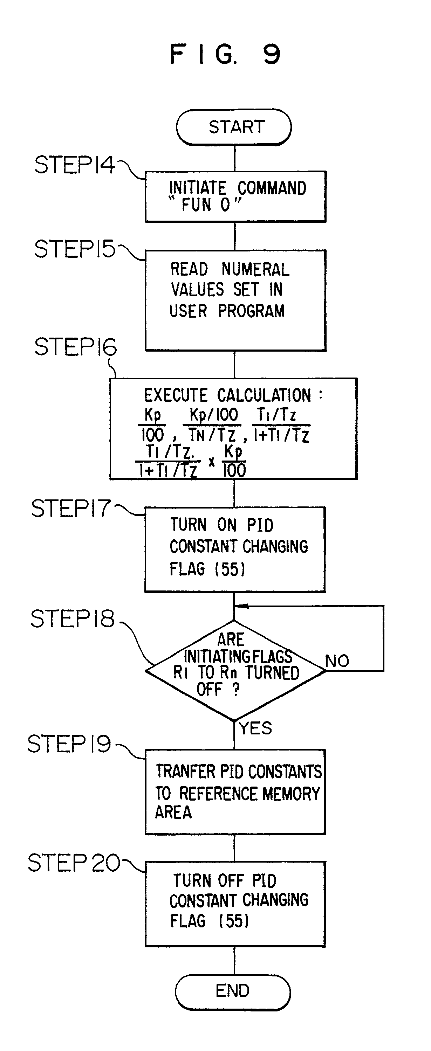

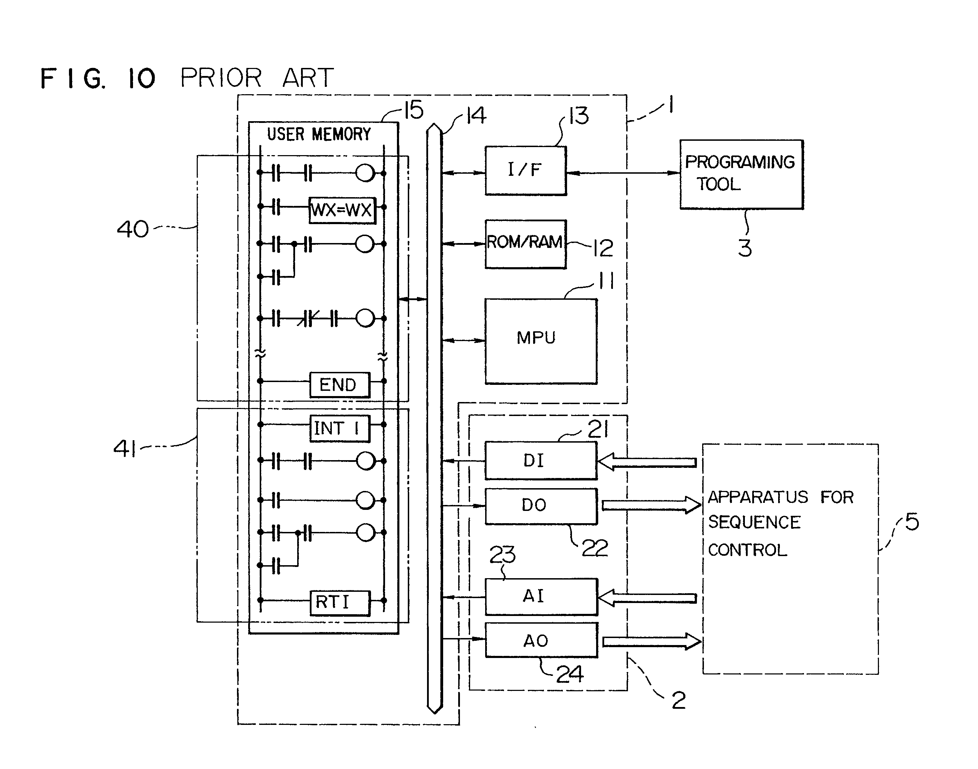

Referring now to Figs. 7 through 9, operation capable of arbitrarily changing the PID constants will now be explained even when the programmable controller la is under operation, or the PID calculation is being carried out. Fig. 7 is a flowchart for explaining the normal scanning program 40 (shown in Fig. l), Fig. 8 is a flowchart for representing the constant period scanning program 4l (shown in Fig. l), and also Fig. 9 is a flowchart for showing a content of the step 5 represented in the flowchart of Fig. 7.

In order to change the PID constants into optimum values, when predetermined numeral values are externally entered into the user program by a user, the normal scanning program 40 is executed. Interruption is made in the constant period scanning program 4l at every 20 milliseconds, the PID calculation is carried out with reference to the contents of the reference memory area 8b, and a calculation result is transferred to the analog output unit 24 so as to carry out a PID control for the apparatus 6 to be controlled.

At a first step l, a judgement is made whether or not the content of the scanning counter employed in the CPU portion l is equal to "l". If this content is equal to "l", since the operation of the normal scanning program 40 begins first, a flag R7E3 is turned on at a step 2. Conversely, if this content is not equal to "l", since the operation of the normal scanning program 40 is carried out after second time, the process is advanced to a step 3. When the flag R7E3 is turned on at the step 3, the processing operation of the user program shown in Fig. 2 is commenced. In other words, the program of the first circuit 20l shown in Fig. 2 is executed at a step 4, and then the PID constants entered by the user, are written into the write memory area 8a. When the count value of the scanning counter becomes "2" after the first scanning operation is completed, since the flag R7E3 is turned off at the step 3, the process is advanced to a step 8, at which as the flag R7E3 is turned off and thereafter a flag RO becomes on, the process is advanced to a step 5. Turning off the flag RO at the step 8 implies no timing where the user does not change the PID constants, so that a sequence calculation process as defined at a step 6 is performed.

At the step 5, the PID calculation as defined in Fig. 9 is executed. That is to say, since the flag RO is turned on as shown in Fig. 9, the command "FUN 0" is initiated at a step l4 and then the numeral values inputted into the user program are read out at a step l5. A preprocessing calculation is performed based upon the read numeral values at a step l6. This preprocessing calculation does not correspond to the calculation process for the PID constants, but to such an operation that the Laplace transform is carried out so as to handle the above-described numeral values by MPU ll. At a step l7, the PID constant changing flag (55) shown in Fig. 4 is turned on. Subsequently, another judgement is made at a step l8 whether or not either an initiating flag "$R_l$" or "$R_2$" of the constant period scanning program 4l is turned off. If the flag becomes off, since the constant scanning program 4l is not executed, namely, the PID control is not carried out, the PID constants of the write memory area 8a is transferred to the reference memory area 8b at a step l9. Then, the PID constant changing flag (55) is turned off at a step 20 and the process is returned to the step 6 shown in Fig. 7. At this step 6, after the PID constants have been rewritten in the reference memory area 8b, the sequence calculation process of the normal scanning program 40, namely, the sequence calculation process defined after the command "FUN 0" of the normal scanning program 40 shown in Fig. l is carried out. Then, an END process involving that the flag R7E3 is turned off is executed and the process is returned to the step l.

In accordance with the constant period scanning program 4l shown in Fig. 8, the PID control for the apparatus 6 to be controlled is carried out and the interruption is made at every 20 milliseconds under operation of the programmable controller la. At a step 9, after an initial process has been executed, any one

7

of relevant initiating flags "$R_l$" to "$R_n$" used for carrying out a PID calculation at a step l0 is turned on. At a next step ll, a decision is made whether or not any one of the initiating flags "$R_l$" to "$R_n$" is turned on. If any one of these initiating flags is turned on, the PID calculation is carried out with reference to the numeral values of the reference memory values of the reference memory area 8b, namely, those of the PID calculation area indicated by the flag (26) shown in Fig. 4, and the PID calculation results are outputted to the analog output unit 24 shown in Fig. l, whereby the apparatus 6 to be controlled is PID-controlled at a step l3. Since no interruption is established if none of these initiating flags "$R_l$" to "$R_n$" is turned on, the process is returned to an instruction succeeding to the interrupt instruction.

As previously described, the constant period scanning program 4l is forcibly interrupted every 20 milliseconds. The time period required for performing the processing operations from the step 9 to the step l3 is approximately 3 milliseconds, and the remaining time period of l7 milliseconds corresponds and a time period required for executing the normal scanning program as defined from the step l to the step 8, in other words, the sequence calculation process indicated at the step 6. Thus, both the PID calculation effected in the constant period scanning program 4l, and also the sequence calculation carried out at the step 6 of the normal scanning program 40 are processed in parallel. As a consequence, the user may input the numeral values for changing the PID constant at the step 4 by providing the write memory area 8a from the step 9 to the step l3 even under the PID calculation. Also, since the PID constants which have been designated by the user in the write memory area 8a are transferred to the reference memory area 8b, these PID constants may be substituted by the optimum values even during the PID calculation operation. This implies that since the PID constants may be changed into the corresponding optimum values even when the operation of the programmable controller la is not interrupted, the rising time for the process control system can be shortened. Furthermore, in case of a process system having a plurality of control loops, it is not required to stop the controls of other control loops in order to change the PID constants of one control loop, so that both stabilities and continuities of the PID controls may be maintained.

If an interlock function is provided with the CPU portion l, no preprocessing calculation on the PID constants is carried out, and thus, the PID calculation by the CPU portion l is brought into a waiting state of execution until the PID constants are transferred from the write memory area 8a to the reference memory area 8b. In this case, since the PID calculation is executed within 3 milliseconds and the transfer operation of the PID constants is carried out within several tens microseconds, both the PID calculation and transfer operation are executed within 20 milliseconds, and therefore the continuities of the PID calculation are not deteriorated.

In accordance with the present invention, the numeral values of the PID constants may be changed into the optimum values without stopping operations of the programmable controller, so that the rising time for the process control system may be shortened. Also, in such a system that a plurality of loop controls are carried out, one loop control may be adjusted without stopping other loop controls, whereby a through-put of the overall system may be increased.

## Claims

1. A programmable controller (la) for processing both a sequence calculation and a PID (proportion, integration and differentiation) calculation in a parallel mode, thereby controlling a process system (6), comprising:
   means (3, 8, 40) for changing a PID constant used for the PID calculation even when said PID calculation is being carried out.

2. A programamble controller (la) according to Claim l wherein said means includes:
   an arithmetic processing apparatus (ll, 4l) for carrying out the calculation on the PID constant used for PID-controlling said process system (6) based upon a predetermined numeral value externally inputted;
   a first memory (8a) for writing therein said PID constant calculated in said arithmetic processing apparatus (ll, 4l);
   transfer means (202) for transferring said PID constant written into said first memory (8a) within a predetermined time period involving a time required for carrying out said PID calculation; and
   a second memory (8b) for storing therein said PID constant transferred from said transfer means and for referring to said PID constant from said process system.

3. A programmable controller (la) according to Claim 2, wherein said arithmetic processing apparatus contains a user program into which a numeral value required for calculating the PID constant is externally inputted.

4. A programmable controller (la) according to Claim 3, wherein said user program includes a first flag (55) which is turned on while no PID calculation is carried out, and when said first flag is turned on and a flag (R7E3) is turned on in an initial operation, the PID constant is calculated based on the numeral value externally inputted so as to write said PID constant into said first memory (8a).

5. A programmable controller (la) according to Claim 2, wherein said transfer means includes a user program, said user program has a second flag (RO) which becomes "on" while no PID calculation is carried out, in arbitrarily inputting data by user, and also becomes "on" after said first flag, and when said second flag is turned "on", said PID constant within said first memory (8a) is transferred to said second memory (8b).

6. A programmable controller (la) according to Claim 5, wherein when said second flag is turned "on" and also the numeral value used for calculating the PID constant is externally inputted into said user program, the PID constant is calculated and a calculation result is written into said first memory (8a).

7. A programmable controller (la) according to Claim 3, wherein the numeral value used for changing the PID constant is externally inputted by a programming tool (3) into the user program.

8. A programmable controller (la) according to Claim 3, wherein a predetermined PID constant is previously set to said user program, and upon receipt of signals externally supplied from a digital switch (43a) and a potentiometer (43b), said user automatically changes said PID constant.

9. A programmable controller including: a central processing apparatus (l) for processing both a sequence calculation and a PID calculation in a parallel mode; a user memory (l5) for storing therein a control logic for said sequence calculation and said PID calculation; input/output means (2) for inputting a measurement value from a process system and also for transferring a target value from said central processing apparatus (l); and a programming tool (3) for writing a numeral value for changing a PID constant used for said PID calculation, into said user memory (l5), comprising:
   a first memory (8a) for arbitrarily writing said PID constant into said user memory (l5);
   transfer means (202) for transferring said PID constant which is written into said first memory (8a) within a predetermined time period determined by the parallel process; and
   a second memory (8b) for storing therein said PID constant which is transferred from said transfer means (202), and for referring to said PID constant from said process system during said PID calculation.

9

EP 0 445 745 A2

# F I G. I

# F I G. 2

201

R7E3
‖

| WR 201 = H100 |
| WR 202 = TZ |
| WR 203 = KP |
| WR 204 = TN/TZ |
| WR 205 = TV/TZ |
| WR 206 = TI/TZ |
| WR 207 = OG |
| WR 208 = UG |
| WR 209 = INIT |
| ADRIO = (WR20A, WX500) |
| ADRIO = (WR20B, WX510) |
| ADRIO = (WR20C, WY520) |
| WR 20D = BIT PATTERN FOR TARGET VALUE |
| WR 20E = BIT PATTERN FOR ACTUAL MEASUREMENT VALUE |
| WR 20F = BIT PATTERN FOR OUTPUT VALUE |

R7E3
‖
R0
‖

FUN 0 (WR 201)

202

# FIG. 3

8

| WR 201 | HED BIT NUMBER FOR R |
|---|---|
| 2 | TZ |
| 3 | KP |
| 4 | TN/TZ |
| 5 | TV/TZ |
| 6 | TI/TZ |
| 7 | OG |
| 8 | UG |
| 9 | INIT |
| A | ADDRESS OF TARGET VALUE |
| B | ADDRESS OF ACTUAL VALUE |
| C | OUTPUT |
| D | BIT PATTERN OF TARGET VALUE |
| E | ACTUAL MEASUREMENT VALUE |
| F | OUTPUT |

8a WRITE MEMORY AREA

TRANSFER

| WR 210 | EXECUTION COUNTER |
|---|---|
| I | KP/100 |
| 2 | |
| 3 | KP/100 |
| 4 | TN/TZ |
| 5 | (TI/TZ)/[I+(TI/TZ)] |
| 6 | (TV TZ)*(KP 100) |
| 7 | (TI/TZ) |
| 8 | TARGET VALUE (W) |
| 9 | ACTUAL MEASUREMENT VALUE (X) |
| A | OUTPUT VALUE (Y) |
| B | DEVIATION (XD) |
| C | XD(n-I) |
| D | YP |
| E | YI |
| F | YDTI |

8b REFERENCE MEMORY AREA

12

# F I G. 4

| WR 200 | ERROR CODE | (10) |
|---|---|---|
| 1 | HEAD BIT NUMBER OF R | (11) |
| 2 | SAMPLING PERIOD TZ | (12) |
| 3 | PROPORTION GAIN KP | (13) |
| 4 | INTEGRAL TIME TN / TZ | (14) |
| 5 | DIFFERENTIAL TIME TV/ TZ | (15) |
| 6 | DIFFERENTIAL DELAY TIME TI/TZ | (16) |
| 7 | OUTPUT UPPER LIMIT VALUE ÖG | (17) |
| 8 | OUTPUT LOWER LIMIT VALUE UG | (18) |
| 9 | INITIAL VALUE   INIT | (19) |
| A | ADDRESS OF TARGET VALUE | (20) |
| B | ADDRESS OF ACTUAL MESUREMENT VALUE | (21) |
| C | ADDRESS OF OUTPUT VALUE | (22) |
| D | BIT PATTERN OF TARGET VALUE | (23) |
| E | BIT PATTERN OF ACTUAL MEASUREMENT VALUE | (24) |
| F | BIT PATTERN OF OUTPUT VALUE | (25) |

8a {

| R100 | S FLAG | (50) |
|---|---|---|
| 1 | R FLAG | (51) |
| 2 | D - FREI | (52) |
| 3 | EXECUTION | (53) |
| 4 | END | (54) |
| 5 | CHANGE PID CONSTANT | (55) |
| 6 | PID CONSTANT OK | (56) |
| 7 | UPPER LIMIT BIT YŌG | (57) |
| 8 | LOWER LIMIT BIT YUG | (58) |
| 9 | PID UNDER EXECUTION | (59) |
| A | | |
| B | | |
| C | | |
| D | | |
| E | | |
| F | | |

8b {

| WR 210 | EXECUTION COUNTER | |
|---|---|---|
| 1 | $\dfrac{KP}{100}$ | |
| 2 | | |
| 3 | $\dfrac{KP/100}{TN/TZ}$ | |
| 4 | | |
| 5 | $(TI/TZ)/[1+(TI/TZ)]$ | (26) |
| 6 | $\dfrac{(TV/TZ)*(KP/100)}{(TI/TZ)}$ | |
| 7 | | |
| 8 | TARGET VALUE | |
| 9 | ACTUAL MEASUREMENT VALUE | |
| A | OUTPUT VALUE | |
| B | DEVIATION | |
| C | $XD(n-1)$ | |
| D | YP | |
| E | YI | |
| F | YDT I | |

F I G. 5

```
WR 000 = KP
WR 001 = KI
WR 002 = KD
```

POWER SUPPLY | CPU | AI | Aθ

USER PROGRAM

6a

6b

6c

F I G. 6

43

```
WR000 = WX40
WR100 = WX50
WR000 = WX60
```

KP=
| 1 | 2 | 3 | 4 |

KI=
| 1 | 2 | 3 | 4 |

KD=
| 1 | 2 | 3 | 4 |

43a

43b

POWER SUPPLY | CPU | AI | AO | DI | AI

23 | 24 | 21

23

6b

6a

6c

6a

14

## F I G. 7

```
          START
            │
STEP 1      ▼
        ◇ IS FIRST 1 ──── NO ───┐
          SCANNING ?            │
            │ YES               │
STEP 2      ▼                   │
        ┌──────────┐            │
        │ TURN ON FLAG │        │
        │ R7E3         │        │
        └──────────┘            │
            │ ◄─────────────────┘
STEP 3      ▼
        ◇ IS FLAG R7E3 ── NO ──── STEP 8
          TURNED ON ?                ◇ IS FLAG R0 ── NO ──┐
            │ YES                      TURNED ON ?         │
STEP 4      ▼                            │ YES             │
        ┌──────────┐                     │                │
        │ WRITE PID CONSTANTS │          │                │
        │ INTO WRITE MEMORY   │          │                │
        └──────────┘                     │                │
            │ ◄──────────────────────────┘                │
STEP 5      ▼                                             │
        ┌──────────┐                                     │
        │ EXECUTE COMMAND │                               │
        │ "FUN 0"         │                               │
        └──────────┘                                     │
            │ ◄──────────────────────────────────────────┘
STEP 6      ▼
        ┌──────────┐
        │ PROCESS SEQUENCE │
        │ CALCULATION WITHIN │
        │ NORMAL SCANNING │
        │ PROGRAM │
        └──────────┘
            │
STEP 7      ▼
        ┌──────────┐
        │ TURN OFF END │
        │ PROCESS FLAG │
        │ P7E3 │
        └──────────┘
```

## F I G. 8

```
                INTERRUPT
          START
            │
STEP 9      ▼
        ┌──────────┐
        │ PROCESS INT 1 │
        └──────────┘
            │
STEP 10     ▼
        ┌──────────┐
        │ INITIATE PROCESS OF │
        │ PID CONTROL │
        └──────────┘
            │
STEP 11     ▼
        ◇ IS INITIATING ── NO ──┐
          FLAGS R1 TO Rn         │
          TURNED ON ?            │
            │ YES                │
STEP 12     ▼                    │
        ┌──────────┐             │
        │ EXECUTE PID CALCULATION │
        │ WITH REFERENCE TO NUMERAL │
        │ VALUES IN REFERENCE │
        │ MEMORY AREA │
        └──────────┘             │
            │                    │
STEP 13     ▼                    │
        ┌──────────┐             │
        │ OUTPUT CALCULATION │   │
        │ RESULT TO ANALOG │     │
        │ OUTPUT UNIT │          │
        └──────────┘             │
            │ ◄──────────────────┘
            ▼
          RTI
```

# F I G. 9

START

STEP14 — INITIATE COMMAND "FUN 0"

STEP15 — READ NUMERAL VALUES SET IN USER PROGRAM

STEP16 — EXECUTE CALCULATION :
$$\frac{Kp}{100}, \quad \frac{Kp/100}{T_N/T_Z}, \quad \frac{T_I/T_Z}{1+T_I/T_Z}$$
$$\frac{T_I/T_Z}{1+T_I/T_Z} \times \frac{Kp}{100}$$

STEP17 — TURN ON PID CONSTANT CHANGING FLAG (55)

STEP18 — ARE INITIATING FLAGS $R_1$ TO $R_n$ TURNED OFF ?  —NO—

—YES—

STEP19 — TRANFER PID CONSTANTS TO REFERENCE MEMORY AREA

STEP20 — TURN OFF PID CONSTANT CHANGING FLAG (55)

END

16

FIG. 10 PRIOR ART

PROGRAMING TOOL 3

APPARATUS FOR SEQUENCE CONTROL 5

I/F 13

ROM/RAM 12

MPU 11

1

14

USER MEMORY 15

WX=WX

END

INT I

RTI

40

41

DI 21

DO 22

AI 23

AO 24

2